# EUROPÄISCHE PATENTSCHRIFT

(11) **EP 4 532 948 B1**
(45) Veröffentlichungstag und Bekanntmachung des Hinweises auf die Patenterteilung: **06.05.2026**
(21) Anmeldenummer: 23728065.6
(22) Anmeldetag: 25.05.2023
(51) Int. Cl.: F16D 48/00

(54) **BESTIMMEN EINER KUPPLUNGSTEMPERATUR EINER FAHRZEUGKUPPLUNG MITTELS EINES NEURONALEN NETZWERKS**
DETERMINING A CLUTCH TEMPERATURE OF A VEHICLE CLUTCH BY MEANS OF A NEURAL NETWORK
DÉTERMINATION D'UNE TEMPÉRATURE D'EMBRAYAGE D'UN EMBRAYAGE DE VÉHICULE AU MOYEN D'UN RÉSEAU NEURONAL

(30) Priorität: 02.06.2022 DE 102022205677
(43) Veröffentlichungstag der Anmeldung: 09.04.2025
(73) Patentinhaber: ZF Friedrichshafen AG, 88046 Friedrichshafen (DE)
(72) Erfinder: BIRK, Markus, 88441 Mittelbiberach (DE); BIEL, Steffen, 88046 Friedrichshafen (DE); HODRIUS, Thomas, 88171 Weiler-Simmerberg (DE)
(74) Vertreter: ZF Friedrichshafen AG
(86) Internationale Anmeldenummer: PCT/EP2023/064028
(87) Internationale Veröffentlichungsnummer: WO 2023/232619

(56) Entgegenhaltungen:
- EP-A2- 2 402 624
- DE-A1- 102018 115 426
- DE-A1- 102020 206 309
- US-B2- 8 090 512

## Beschreibung

### Technisches Gebiet

Die vorliegende Erfindung betrifft ein Verfahren zum Bestimmen einer Kupplungstemperatur einer Fahrzeugkupplung mittels eines neuronalen Netzwerks. Die Erfindung betrifft zudem ein Verfahren zum Erzeugen eines Trainingsdatensatzes für ein neuronales Netzwerk, welches dazu ausgebildet ist, eine Kupplungstemperatur einer Fahrzeugkupplung zu bestimmen. Die Erfindung betrifft ferner eine zugehörige Steuereinrichtung zur Bestimmung einer Kupplungstemperatur einer Fahrzeugkupplung mit einem neuronalen Netzwerk.

### Stand der Technik

Die Temperatur einer Fahrzeugkupplung kann mittels eines klassischen regelbasierten mathematischen Modells berechnet werden. Die Berechnung kann in einem Getriebesteuergerät stattfinden. Hierfür kann maschinelles Lernen verwendet werden, beispielsweise ein neuronales Netz. Bisher werden zur Bestimmung der Kupplungstemperatur nicht-lineare und strukturell komplexe neuronale Netze verwendet, beispielsweise sogenannte gefaltete neuronale Netze. Stand der Technik sind DE10 2018 115426A1 und DE 10 2020 206309A1.

### Darstellung der Erfindung

Die Erfindung bezieht sich in einem ersten Aspekt auf ein Verfahren zum Bestimmen einer Kupplungstemperatur einer Fahrzeugkupplung mittels eines neuronalen Netzwerks.

Die Fahrzeugkupplung kann in einem motorgetriebenen Fahrzeug, wie beispielsweise einem Kraftfahrzeug, einem Kraftrad oder einem zumindest teilweise elektrisch angetriebenen Zweirad verbaut sein. Mittels der Fahrzeugkupplung kann eine von dem Motor des Fahrzeugs aufgebrachte Antriebskraft an eine Antriebsachse des Fahrzeugs übertragen werden. Die Fahrzeugkupplung kann zumindest zwei verschiedene Schaltzustände beziehungsweise Gänge aufweisen, welche durch ein vorgegebenes Verhältnis zwischen dem Abtriebsdrehmoment des Motors und dem Antriebsdrehmoment der Antriebsachse definiert sein können.

Unter einer Kupplungstemperatur kann die Temperatur zumindest eines Kupplungselements verstanden werden, beispielsweise die Temperatur einer Kupplungsscheibe. Alternativ kann unter einer Kupplungstemperatur auch eine Temperatur der gesamten Fahrzeugkupplung verstanden werden, welche beispielsweise auf der Bestimmung eines Mittelwerts der einzelnen Temperaturen der Kupplungselementen basieren kann. Durch den Betrieb des Fahrzeugs kann sich die Temperatur der Fahrzeugkupplung ändern. Beispielsweise kann die Temperatur der Fahrzeugkupplung während eines Schaltvorgangs beziehungsweise eines Gangwechsels steigen. Steigt die Temperatur der Fahrzeugkupplung über einen kritischen Temperaturwert, kann dies zu Beschädigungen oder einem Ausfall der Fahrzeugkupplung führen. Die Bestimmung einer Kupplungstemperatur der Fahrzeugkupplung trägt daher zur Sicherheit des Fahrzeugs bei.

Unter einem neuronalen Netzwerk kann ein mathematisches Modell verstanden werden, welches die Struktur der Neuronen im menschlichen Gehirn zumindest teilweise nachbildet. Das neuronale Netzwerk kann mithilfe eines Computers erstellt werden. Das neuronale Netzwerk kann Eingangsknoten, Ausgangsknoten und mehrere Zwischenknoten aufweisen, welche zwischen den Eingangsknoten und den Ausgangsknoten angeordnet sind. Die Eingangsknoten können beispielsweise Datenschnittstellen sein, über welche Eingabedaten in das neuronale Netzwerk eingegeben werden können. Die Ausgangsknoten können beispielsweise Datenschnittstellen sein, über welche Ausgabedaten aus dem neuronalen Netzwerk ausgegeben werden können. Die Eingangsknoten können mit den Zwischenknoten und die Zwischenknoten können miteinander verbunden sein. Die Zwischenknoten können mit den Ausgangsknoten verbunden sein. Die Eingabedaten können historische Daten sein, welche zu einem bestimmten Zeitpunkt erfasst wurden. Alternativ oder zusätzlich können die Eingabedaten synthetische Daten sein, welche durch Verarbeitung erfasster beziehungsweise gemessener Daten erzeugt wurden. Analog hierzu können die Ausgabedaten historische Daten beziehungsweise synthetische Daten sein.

Auf den Zwischenknoten kann Information zumindest temporär zwischengespeichert werden. Es kann vorgesehen sein, dass auf den Zwischenknoten zumindest eine Rechenoperation ausgeführt wird. Die Eingabedaten können von den Eingangsknoten über die Zwischenknoten zu den Ausgangsknoten übertragen werden. Während dieser Übertragung können die Eingabedaten mathematisch verarbeitet werden, beispielsweise zu den Ausgabedaten umgewandelt werden. Die Zwischenknoten des neuronalen Netzwerks können in einer oder mehreren Schichten beziehungsweise Ebenen angeordnet sein. Die Zwischenknoten können innerhalb einer Schicht miteinander verbunden sein. Zusätzlich können die Zwischenknoten einer Schicht mit den Zwischenknoten anderer Schichten verbunden sein. Die einzelnen Verbindungen der Eingangsknoten, der Zwischenknoten und der Ausgangsknoten können mit mathematischen Gewichtungen versehen sein. Je nach Zweck des neuronalen Netzwerks können die einzelnen Gewichtungen der Verbindungen unterschiedlich sein. Während des Trainings des neuronalen Netzwerks können die Gewichtungen verändert werden. Durch die Anpassung der mathematischen Gewichtungen der Verbindungen der einzelnen Knoten während des Trainings kann von dem neuronalen Netzwerk ein Zusammenhang zwischen den Eingabedaten und den Ausgabedaten gelernt werden. Während der Verwendung des neuronalen Netzwerks zu dem vorgesehenen Zweck kann der gelernte Zusammenhang von dem neuronalen Netzwerk auf eingegebene Eingabedaten angewandt werden, um Ausgabedaten gemäß dem vorgegebenen Verwendungszweck des neuronalen Netzwerks zu erzeugen.

Zur Bestimmung einer Kupplungstemperatur kann beispielsweise ein Multi-Layer-Perceptron, MLP, als neuronales Netzwerk verwendet werden. Dieses neuronale Netzwerk weist zumindest eine Schicht von Zwischenknoten auf und verwendet zur Berechung der Ausgabedaten zumindest eine nicht-lineare mathematische Funktion. Ein weiters beispielhaftes neuronales Netzwerk zur Bestimmung einer Kupplungstemperatur kann ein Fully Connected Layer, FCL, Netzwerk sein. Bei diesem neuronalen Netzwerk sind alle Eingangsknoten, Zwischenknoten und Ausgangsknoten miteinander verbunden. Ferner kann zur Bestimmung einer Kupplungstemperatur beispielsweise ein Convolutional Neural Network, CNN, verwendet werden, bei welchem die Zwischenknoten verschiedener Schichten zumindest teilweise in Form einer mathematischen Faltungsfunktion miteinander verbunden sind.

Das Verfahren weist einen Schritt des Bestimmens zumindest eines Eingangswerts auf, welcher für eine der Fahrzeugkupplung zugeführte Leistung repräsentativ ist. Der zumindest eine Eingangswert wird basierend auf einer Verarbeitung zeitlich aufeinanderfolgender Werte für die der Fahrzeugkupplung zugeführten Leistung bestimmt. Unter der der Fahrzeugkupplung zugeführten Leistung kann eine physikalische Leistung verstanden werden, also eine Energiemenge, welche der Fahrzeugkupplung während einer vorgegebenen Zeitspanne zugeführt wird. Beispielsweise kann es sich bei der der Fahrzeugkupplung zugeführten Leistung um eine der Fahrzeugkupplung während eines Schaltvorgangs beziehungsweise eines Gangwechsels derselben zugeführte Schaltleistung handeln. Die der Fahrzeugkupplung zugeführte Leistung kann für eine Änderung der Kupplungstemperatur der Fahrzeugkupplung repräsentativ sein.

Die der Fahrzeugkupplung zugeführte Leistung kann in bestimmten Zeitabständen erfasst werden. Die einzelnen Werte für die der Fahrzeugkupplung zugeführten Leistung können beispielsweise entsprechend ihres Erfassungszeitpunkts in aufsteigender Reihenfolge angeordnet werden. Diese zeitlich aufeinanderfolgenden Werte für die der Fahrzeugkupplung zugeführte Leistung können mathematisch verarbeitet werden, beispielsweise mittels einer vorgegebenen Rechenoperation wie der Bildung eines Mittelwerts.

Das Verfahren weist ferner den Schritt der Eingabe des zumindest einen Eingangswerts als Eingabedaten in das neuronale Netzwerk auf. Der zumindest eine Eingangswert kann beispielsweise mittels einer Eingabevorrichtung an zumindest einen der Eingangsknoten des neuronalen Netzwerks übertragen werden. Alternativ kann der zumindest eine Eingangswert von einer Steuereinrichtung des Fahrzeugs über eine Datenschnittstelle an zumindest einen der Eingangsknoten des neuronalen Netzwerks übertragen werden. Der zumindest eine Eingangswert kann als Eingabedaten für die Verwendung des neuronalen Netzwerks zur Bestimmung der Kupplungstemperatur verwendet werden. Alternativ oder zusätzlich kann der zumindest eine Eingangswert als Eingabedaten für das Training des neuronalen Netzwerks verwendet werden.

Das Verfahren weist ferner den Schritt der Eingabe zumindest eines Wertes zumindest eines Betriebsparameters der Fahrzeugkupplung als Eingabedaten in das neuronale Netzwerk auf. Der zumindest eine Wert des zumindest einen Betriebsparameters der Fahrzeugkupplung kann repräsentativ für eine der Fahrzeugkupplung zugeführte Leistung sein. Alternativ oder zusätzlich kann der zumindest eine Wert des zumindest einen Betriebsparameters der Fahrzeugkupplung repräsentativ für eine Kupplungstemperatur der Fahrzeugkupplung sein. Der zumindest eine Wert des zumindest einen Betriebsparameters kann beispielsweise mittels einer Eingabevorrichtung an zumindest einen der Eingangsknoten des neuronalen Netzwerks übertragen werden. Alternativ kann der zumindest eine Wert des zumindest einen Betriebsparameters von einer Steuereinrichtung des Fahrzeugs über eine Datenschnittstelle an zumindest einen der Eingangsknoten des neuronalen Netzwerks übertragen werden. Der zumindest eine Wert des zumindest einen Betriebsparameters kann als Eingabedaten für die Verwendung des neuronalen Netzwerks zur Bestimmung der Kupplungstemperatur verwendet werden. Alternativ oder zusätzlich kann der zumindest eine Wert des zumindest einen Betriebsparameters als Eingabedaten für das Training des neuronalen Netzwerks verwendet werden.

Das Verfahren weist ferner den Schritt des Bestimmens einer Kupplungstemperatur durch das neuronale Netzwerk auf. Das neuronale Netzwerk bestimmt die Kupplungstemperatur basierend auf den Eingabedaten und einem von dem neuronalen Netzwerk gelernten Zusammenhang zwischen einem zeitlichen Verlauf der Eingabedaten und der Kupplungstemperatur. Die Eingabedaten können von dem neuronalen Netzwerk, beispielsweise auf den Zwischenknoten, gemäß dem gelernten Zusammenhang verarbeitet werden, um die Kupplungstemperatur zu bestimmen. Beim Lernen des Zusammenhangs kann von dem neuronalen Netzwerk die mathematische Gewichtung der Verbindungen der einzelnen Knoten geändert werden, um die Kupplungstemperatur zu bestimmen. Die von dem neuronalen Netzwerk bestimmte Kupplungstemperatur kann von weiteren Komponenten der Fahrzeugsteuerung verwendet werden. Beispielsweise kann mit der bestimmten Kupplungstemperatur ein Ansteuerwert für eine Steuereinheit des Fahrzeugs, beispielsweise eine Getriebesteuerung für ein Automatikgetriebe, erzeugt werden. Der Ansteuerwert kann ferner auf einer Anzeigeeinheit des Fahrzeugs dargestellt werden. Alternativ oder zusätzlich kann der auf der Kupplungstemperatur basierende Ansteuerwert von einer Auswerteeinheit verarbeitet werden, welche beispielsweise der Überwachung der Fahrsicherheit des Fahrzeugs dient.

Das vorgeschlagene Verfahren ermöglicht das Bestimmen einer Kupplungstemperatur mittels eines neuronalen Netzwerks. Hierdurch kann auf die Verwendung von klassischen mathematischen Modellen verzichtet werden, welche im Allgemeinen sehr komplex und daher zeitaufwendig zu berechnen sind. Durch die Verwendung eines neuronalen Netzwerks kann somit einerseits die zum Bestimmen der Kupplungstemperatur benötigte Berechnungszeit reduziert werden. Ferner basiert das Bestimmen der Kupplungstemperatur auf einem zeitlichen Verlauf der Eingabedaten. Somit kann auch eine zeitliche Änderung der Eingabedaten von dem neuronalen Netzwerk berücksichtigt werden. Beispielsweise kann eine Abkühl- oder Aufheizphase der Fahrzeugkupplung erfasst und bei der Bestimmung der Kupplungstemperatur berücksichtigt werden. Ferner kann beispielsweise das Überschreiten eines Grenzwerts für die Kupplungstemperatur beziehungsweise eine Abweichung von einem Normverhalten der Kupplungstemperatur während der Aufheiz- oder Abkühlphase berücksichtigt werden. Die Kupplungstemperatur kann demnach außerdem präziser von dem neuronalen Netzwerk bestimmt werden. Weiterhin wird der zeitliche Verlauf der Eingabedaten nicht von dem neuronalen Netzwerk selbst bestimmt, sondern diesem lediglich in Form des verarbeiteten Eingangswerts übermittelt. Der für die Bestimmung der Kupplungstemperatur benötigte Rechenaufwand wird dadurch verringert. Somit kann die Struktur des neuronalen Netzwerks weniger komplex ausgebildet werden. Deshalb kann auch der für das neuronale Netzwerk benötigte Speicherplatz reduziert werden.

Nach einer Ausführungsform erfolgt das Bestimmen des zumindest einen Eingangswerts mittels einer Erfassungsvorrichtung, welche die zeitlich aufeinanderfolgenden Werte für die der Fahrzeugkupplung zugeführte Leistung erfasst. Die Erfassungsvorrichtung kann eine zum Empfang und zur Verarbeitung von elektrischen Signalen ausgebildete Vorrichtung sein. Die Erfassungsvorrichtung kann die Werte für die der Fahrzeugkupplung zugeführte Leistung mit einer jeweiligen Zeitinformation versehen, welche repräsentativ für einen Erfassungszeitpunkt der jeweiligen Werte sein kann. Mittels der Zeitinformation können die erfassten Werte in einer zeitlichen Reihenfolge angeordnet werden. Die Erfassungsvorrichtung kann die erfassten Werte für die der Fahrzeugkupplung zugeführte Leistung für die Verarbeitung zwischenspeichern. Alternativ kann die Erfassungsvorrichtung die erfassten Werte für die der Fahrzeugkupplung zugeführte Leistung an eine Steuereinrichtung des Fahrzeugs übertragen, in welcher die Verarbeitung der erfassten Werte zum Bestimmen des zumindest einen Eingangswerts vorgenommen werden kann. Eine Erfassungsvorrichtung ist ein besonders einfaches Mittel, um zeitlich aufeinanderfolgende Werte für die der Fahrzeugkupplung zugeführte Leistung zu erhalten.

Gemäß einer weiteren Ausführungsform erfolgt die Erfassung der zeitlich aufeinanderfolgende Werte für die der Fahrzeugkupplung zugeführte Leistung von einem vorbestimmten Startzeitpunkt bis zum Eingabezeitpunkt der Eingabedaten in das neuronale Netzwerk. Die Erfassung und zeitliche Ordnung der Werte für die der Fahrzeugkupplung zugeführte Leistung kann mit der zumindest einen Erfassungsvorrichtung erfolgen. Alternativ können die Werte für die der Fahrzeugkupplung zugeführte Leistung anderweitig erfasst beziehungsweise zeitlich geordnet werden. Der Startzeitpunkt kann von einem Benutzer, beispielsweise einem Fahrer des Fahrzeugs, vorgegeben werden. Alternativ kann der Startzeitpunkt von einem Hersteller des Fahrzeugs vorgegeben werden. Der Startzeitpunkt kann beliebig gewählt werden. Der Eingabezeitpunkt der Eingabedaten kann denjenigen Zeitpunkt bezeichnen, zu welchem der zumindest eine Eingangswert in das neuronale Netzwerk eingegeben wird. Alternativ oder zusätzlich kann der Eingabezeitpunkt denjenigen Zeitpunkt bezeichnen, zu welchem der zumindest eine Wert des zumindest einen Betriebsparameters in das neuronale Netzwerk eingegeben wird. Durch die Vorgabe des Startzeitpunkts für die Erfassung der zeitlich aufeinanderfolgenden Werte für die der Fahrzeugkupplung zugeführte Leistung kann das Verfahren zur Bestimmung der Kupplungstemperatur an verschiedene Arten von Fahrzeugkupplungen beziehungsweise verschiedene Betriebszustände des Fahrzeugs angepasst werden.

Nach einer weiteren Ausführungsform umfasst die Verarbeitung der zeitlich aufeinanderfolgenden Werte für die der Fahrzeugkupplung zugeführte Leistung die Bestimmung eines Mittelwerts für die der Fahrzeugkupplung zugeführte Leistung. Unter einem Mittelwert für die der Fahrzeugkupplung zugeführte Leistung kann beispielsweise ein arithmetischer Mittelwert, ein geometrischer Mittelwert oder ein quadratischer Mittelwert verstanden werden. Bei der Bestimmung des Mittelwerts können alle zum Bestimmungszeitpunkt vorliegenden zeitlich aufeinanderfolgenden Werte berücksichtigt werden. Alternativ kann bei der Bestimmung des Mittelwerts nur eine Teilmenge der zeitlich aufeinanderfolgenden Werte für die der Fahrzeugkupplung zugeführte Leistung berücksichtigt werden. Der Mittelwert kann von einer Erfassungsvorrichtung bestimmt werden, welche die zeitlich aufeinanderfolgenden Werte für die der Fahrzeugkupplung zugeführte Leistung erfasst. Alternativ kann der Mittelwert von einer Steuereinrichtung des Fahrzeugs bestimmt werden, welcher die zeitlich aufeinanderfolgenden Werte für die der Fahrzeugkupplung zugeführte Leistung übermittelt werden. Die Bestimmung eines Mittelwerts ist eine einfache Rechenoperation, mit welcher außerdem, insbesondere bei statischer Betrachtung, ein Zusammenhang zwischen den einzelnen Werten für die der Fahrzeugkupplung zugeführte Leistung bestimmt werden kann.

Gemäß einer weiteren Ausführungsform sind mehrere Erfassungsvorrichtungen zum Erfassen der zeitlich aufeinanderfolgenden Werte für die der Fahrzeugkupplung zugeführte Leistung vorgesehen. Für jede der Erfassungsvorrichtungen ist ein unterschiedlicher Startzeitpunkt für die Erfassung bestimmt. Beispielsweise kann eine Erfassungsvorrichtung für eine Langzeiterfassung der Werte für die der Fahrzeugkupplung zugeführte Leistung vorgesehen sein. Für die Langzeiterfassung kann in großen zeitlichen Abständen, beispielsweise in Abständen von 1 Minute, 5 Minuten, 10 Minuten oder 30 Minuten, jeweils ein Wert für die der Fahrzeugkupplung zugeführte Leistung erfasst werden. Eine weitere Erfassungsvorrichtung kann für eine Kurzzeiterfassung der Werte für die der Fahrzeugkupplung zugeführte Leistung vorgesehen sein. Für die Kurzzeiterfassung kann in kleinen zeitlichen Abständen, beispielsweise in Abständen von 30 Sekunden, 1 Sekunde, 100 ms oder 10 ms, jeweils ein Wert für die der Fahrzeugkupplung zugeführte Leistung erfasst werden. Für jede der Erfassungsvorrichtungen kann ein Eingangswert durch Verarbeiten der erfassten Werte für die der Fahrzeugkupplung zugeführte Leistung bestimmt werden. In diesem Fall kann beispielweise ein Eingangswert für eine Langzeiterfassung der Werte für die der Fahrzeugkupplung zugeführte Leistung und ein weiterer Eingangswert für eine Kurzzeiterfassung der Werte für die der Fahrzeugkupplung zugeführte Leistung bestimmt werden. Der zeitliche Verlauf der der Fahrzeugkupplung zugeführten Leistung kann somit detailliert bestimmt und von dem neuronalen Netzwerk bei der Bestimmung der Kupplungstemperatur berücksichtigt werden.

Nach einer weiteren Ausführungsform ist die zumindest eine Erfassungsvorrichtung aus zumindest einem der folgenden ausgewählt: einer zur Datenerfassung ausgebildeten Steuereinheit, einem Tiefpass-Filter und einem Operationsverstärker. Unter einem Tiefpass-Filter kann eine elektronische Einheit zur Signalverarbeitung verstanden werden, mit welcher Daten in Form von elektrischen Signalen über einen bestimmten Zeitraum aufgenommen werden können. Beispielsweise kann es sich bei einem Tiefpass-Filter um ein elektronisches Bauteil zur Signalverarbeitung handeln, welches Signale, deren Frequenz unterhalb einer Grenzfrequenz liegt, im Wesentlichen unverändert weiterleitet. Signale, deren Frequenz oberhalb der Grenzfrequenz liegt, werden von dem Tiefpass-Filter hinsichtlich ihrer Amplitude gedämpft weitergeleitet.

Unter einem Operationsverstärker kann eine elektronische Einheit zur Signalverarbeitung verstanden werden, mit welcher Daten in Form von elektrischen Signalen über einen bestimmten Zeitraum aufgenommen werden können. Beispielsweise kann es sich bei einem Operationsverstärker um ein elektronisches Bauteil zur Signalverarbeitung handeln, welches eingehende Signale hinsichtlich ihrer Amplitude verstärken und weiterleiten kann. Beispielsweise können die Amplituden mehrerer in den Operationsverstärker eingehender Signale aufsummiert werden. In diesem Fall kann von dem Operationsverstärker ein elektrisches Signal ausgeben werden, dessen Amplitude der Summe der aufsummierten Amplituden der Eingangssignale entspricht. Durch das Aufsummieren der Amplituden mehrerer Eingangssignale kann eine Zeitverzögerung in der Weiterleitung dieser Signale erreicht werden. Ein Tiefpass-Filter und ein Operationsverstärker stellen somit günstig zu beschaffende und leicht zu verbauende elektronische Bauteile zur Signalverarbeitung dar, mit welchen eine Zeitverzögerung der in diese Bauteile eingehenden Signale erreicht werden kann.

Gemäß einer weiteren Ausführungsform ist der zumindest eine Betriebsparameter der Fahrzeugkupplung aus zumindest einem der folgenden ausgewählt: einem Drehmoment einer Antriebsachse eines Fahrzeugmotors, welche mit der Fahrzeugkupplung in mechanischer Wirkverbindung steht; einer Drehzahldifferenz zwischen zwei rotierenden Kupplungselementen der Fahrzeugkupplung; einer Drehzahl eines rotierenden Kupplungselements der Fahrzeugkupplung; einem auf ein Kupplungselement der Fahrzeugkupplung wirkenden mechanischen Druck; einer Stromstärke eines durch ein Kupplungselement der Fahrzeugkupplung fließenden elektrischen Stroms; und einer Sumpftemperatur eines Fahrzeuggetriebes zu Beginn eines Schaltvorgangs der Fahrzeugkupplung. Bei Kupplungselementen der Fahrzeugkupplung kann es beispielsweise um die Kupplungsscheiben einer Fahrzeugkupplung handeln, welche zur Kraftübertragung von dem Motor an die Antriebsachse verbunden werden können. Die obigen Parameter können für eine der Fahrzeugkupplung zugeführte Leistung repräsentativ sein. Alternativ oder zusätzlich können die obigen Parameter für eine Kupplungstemperatur der Fahrzeugkupplung repräsentativ sein. Durch Verwendung zumindest eines dieser Parameter kann die Bestimmung der Kupplungstemperatur somit erleichtert werden.

Die Erfindung bezieht sich in einem zweiten Aspekt auf ein Verfahren zum Erzeugen eines Trainingsdatensatzes für ein neuronales Netzwerk, welches dazu ausgebildet ist, eine Kupplungstemperatur einer Fahrzeugkupplung zu bestimmen. Das Verfahren weist die folgenden Schritte auf: Bereitstellen mehrerer, zeitlich aufeinanderfolgender Werte für eine der Fahrzeugkupplung zugeführte Leistung; Verarbeiten der bereitgestellten, zeitlich aufeinanderfolgenden Werte, um einen Eingangswert zu bestimmen, welcher für die der Fahrzeugkupplung zugeführte Leistung repräsentativ ist; Bereitstellen zumindest eines Wertes zumindest eines Betriebsparameters der Fahrzeugkupplung; und Bereitstellen von Werten für eine Kupplungstemperatur. Der Trainingsdatensatz umfasst den Eingangswert und den Wert des zumindest einen Betriebsparameters als Eingabedaten, sowie die Werte für die Kupplungstemperatur als Ausgabedaten. Mittels des Trainingsdatensatzes kann das neuronale Netzwerk einen Zusammenhang zwischen einem zeitlichen Verlauf der Eingabedaten und der Kupplungstemperatur lernen.

Die Werte für eine der Fahrzeugkupplung zugeführte Leistung, der zumindest eine Wert des zumindest eines Betriebsparameters der Fahrzeugkupplung und die Werte für eine Kupplungstemperatur können mittels dazu ausgebildeter Vorrichtungen für die elektrische Signalbearbeitung erfasst werden. Das Verarbeiten der bereitgestellten Werte für eine der Fahrzeugkupplung zugeführte Leistung kann mittels einer dazu ausgebildeten Vorrichtung für die elektrische Signalbearbeitung erfolgen, Die erfassten beziehungsweise verarbeiteten Werte können einer Eingabevorrichtung zur Eingabe von Eingabedaten in das neuronale Netzwerk bereitgestellt werden. Alternativ können die erfassten beziehungsweise verarbeiteten Werte von den dazu ausgebildeten Vorrichtungen über eine Datenschnittstelle an die Eingangsknoten des neuronalen Netzwerks übertragen werden. Alternativ oder zusätzlich können die Eingabedaten beziehungsweise die Ausgabedaten als synthetische Daten vorliegen, welche durch Umwandlung von erfassten beziehungsweise bestimmten Daten erzeugt werden können.

Das neuronale Netzwerk gemäß dem Verfahren des ersten Aspekts kann mit einem Trainingsdatensatz trainiert werden, welcher gemäß dem Verfahren nach dem zweiten Aspekt erzeugt wurde. Hierdurch können die Vorteile der beiden Aspekte kombiniert werden.

Die Erfindung bezieht sich in einem dritten Aspekt auf eine Steuereinrichtung zur Bestimmung einer Kupplungstemperatur einer Fahrzeugkupplung. Die Steuereinrichtung umfasst ein computerlesbares Speichermedium, auf welchem ein neuronales Netzwerk zum Bestimmen der Kupplungstemperatur gespeichert ist. Ferner umfasst die Steuereinrichtung zumindest eine Erfassungsvorrichtung, welche zeitlich aufeinanderfolgende Werte für eine der Fahrzeugkupplung zugeführte Leistung erfasst. Weiter umfasst die Steuereinrichtung eine Bestimmungsvorrichtung zur Bestimmung zumindest eines Eingangswerts, welcher für eine der Fahrzeugkupplung zugeführte Leistung repräsentativ ist. Der zumindest eine Eingangswert wird basierend auf einer Verarbeitung der von der Erfassungsvorrichtung erfassten, zeitlich aufeinanderfolgenden Werte für die der Fahrzeugkupplung zugeführten Leistung bestimmt. Die Steuereinrichtung umfasst weiter eine Eingabevorrichtung zur Eingabe von Eingabedaten in das neuronale Netzwerk. Die Eingabedaten umfassen den zumindest einen Eingangswert und zumindest einen Wert zumindest eines Betriebsparameters der Fahrzeugkupplung. Ferner umfasst die Steuereinrichtung eine Ausgabevorrichtung zur Ausgabe der bestimmten Kupplungstemperatur durch das neuronale Netzwerk.

Die genannten Vorrichtungen der Steuereinrichtung gemäß dem dritten Aspekt können zum Empfangen, zur Verarbeitung und zur Weiterleitung von elektrischen Signalen ausgebildet sein. Die genannten Vorrichtungen der Steuereinrichtung gemäß dem dritten Aspekt können zur Durchführung des Verfahrens gemäß dem ersten Aspekt und/oder dem zweiten Aspekt ausgebildet sein. Analog kann das Verfahren gemäß dem ersten Aspekt beziehungsweise dem zweiten Aspekt von der Steuereinrichtung gemäß dem dritten Aspekt durchgeführt werden. Die zu dem ersten beziehungsweise dem zweiten Aspekt erläuterten Ausführungsformen, technischen Effekte und Vorteile gelten somit analog auch für die Steuereinrichtung nach dem dritten Aspekt.

### Kurze Beschreibung der Zeichnungen

- Figur 1: zeigt ein Ablaufdiagramm mit Schritten eines Verfahrens zum Bestimmen einer Kupplungstemperatur einer Fahrzeugkupplung mittels eines neuronalen Netzwerks, nach einer Ausführungsform der Erfindung.
- Figur 2: zeigt ein Ablaufdiagramm mit Schritten eines Verfahrens zum Erzeugen eines Trainingsdatensatzes für ein neuronales Netzwerk, welches dazu ausgebildet ist, eine Kupplungstemperatur einer Fahrzeugkupplung zu bestimmen, nach einer weiteren Ausführungsform der Erfindung.
- Figur 3: zeigt schematisch eine Steuereinrichtung zur Bestimmung einer Kupplungstemperatur einer Fahrzeugkupplung mit einem neuronalen Netzwerk gemäß einer weiteren Ausführungsform der Erfindung.

### Detaillierte Beschreibung von Ausführungsformen

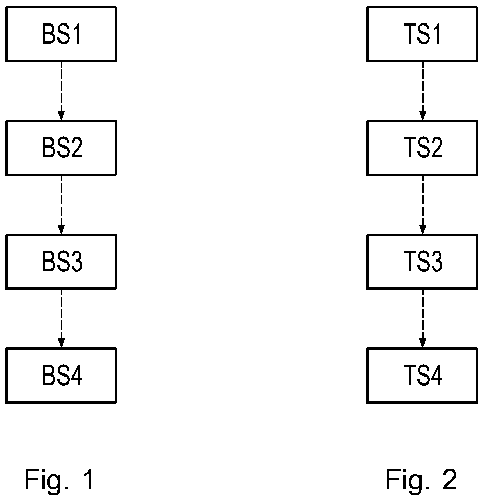

Figur 1 zeigt ein Ablaufdiagramm mit Schritten eines Verfahrens zum Bestimmen einer Kupplungstemperatur einer Fahrzeugkupplung mittels eines neuronalen Netzwerks nach einer Ausführungsform der Erfindung.

In einem ersten Bestimmungsschritt BS1 wird zumindest ein Eingangswert bestimmt, welcher für eine der Fahrzeugkupplung zugeführte Leistung repräsentativ ist. Der zumindest eine Eingangswert wird basierend auf einer Verarbeitung zeitlich aufeinanderfolgender Werte für die der Fahrzeugkupplung zugeführte Leistung bestimmt. Die der Fahrzeugkupplung zugeführte Leistung ist im Ausführungsbeispiel der Figur 1 die während eines Schaltvorgangs beziehungsweise Gangwechsels der Fahrzeugkupplung zugeführte Schaltleistung.

Die Werte für die Schaltleistung werden mittels einer Erfassungsvorrichtung wie einem Tiefpass-Filter erfasst. Die Erfassung erfolgt von einem vorbestimmten Startzeitpunkt bis zum Eingabezeitpunkt der Eingabedaten in das neuronale Netzwerk. Die erfassten Werte der Schaltleistung werden von der Erfassungsvorrichtung mit einer Zeitinformation versehen und basierend auf der Zeitinformation in einer zeitlichen Reihenfolge angeordnet. Die zeitlich aufeinanderfolgenden Werte für die Schaltleistung werden verarbeitet, um einen Mittelwert für die Schaltleistung zu bestimmen.

In einem zweiten Bestimmungsschritt BS2 wird der zumindest eine Eingangswert als Eingabedaten in das neuronale Netzwerk eingegeben. Der zumindest eine Eingangswert wird hierbei an zumindest einen Eingangsknoten des neuronalen Netzwerks übertragen.

In einem dritten Bestimmungsschritt BS3 wird zumindest ein Wert zumindest eines Betriebsparameters der Fahrzeugkupplung als Eingabedaten in das neuronale Netzwerk eingegeben. Der zumindest eine Wert des zumindest einen Betriebsparameters wird hierbei an zumindest einen Eingangsknoten des neuronalen Netzwerks übertragen.

In einem vierten Bestimmungsschritt BS4 wird durch das neuronale Netzwerk eine Kupplungstemperatur bestimmt. Die Kupplungstemperatur wird basierend auf den Eingabedaten und einem von dem neuronalen Netzwerk gelernten Zusammenhang zwischen einem zeitlichen Verlauf der Eingabedaten und der Kupplungstemperatur bestimmt.

Zur Bestimmung der Kupplungstemperatur werden die an die Eingangsknoten des neuronalen Netzwerks übertragenen Eingabedaten über von dem neuronalen Netzwerk mathematisch gewichtete Verbindungen an Zwischenknoten des neuronalen Netzwerks übertragen. Auf den Zwischenknoten werden die übertragenen Eingabedaten verarbeitet und über von dem neuronalen Netzwerk mathematisch gewichtete Verbindungen an Ausgangsknoten des neuronalen Netzwerks übertragen. Die mathematische Gewichtung der jeweiligen Verbindungen wurde von dem neuronalen Netzwerk während eines dem Bestimmungsverfahren zeitlich vorangehenden Trainingsvorgangs des neuronalen Netzwerks basierend auf einem Trainingsdatensatz angepasst. Auf zumindest einem Ausgangsknoten des neuronalen Netzwerks liegt am Ende der Verfahrensdurchführung ein Wert für eine Kupplungstemperatur vor.

Durch die Bestimmung des zumindest einen Eingangswerts wird ein zeitlicher Verlauf der Schaltleistung bei der Bestimmung der Kupplungstemperatur berücksichtigt. Da dieser zeitliche Verlauf jedoch nicht von dem neuronalen Netzwerk selbst bestimmt, sondern diesem lediglich übermittelt wird, kann der von dem neuronalen Netzwerk benötigte Rechenaufwand zur Bestimmung der Kupplungstemperatur geringgehalten werden. Das neuronale Netzwerk kann deshalb weniger komplex ausgeführt werden. Ein von dem neuronalen Netzwerk benötigter Speicherplatz kann somit ebenfalls geringgehalten werden.

Figur 2 zeigt ein Ablaufdiagramm mit Schritten eines Verfahrens zum Erzeugen eines Trainingsdatensatzes für ein neuronales Netzwerk, welches dazu ausgebildet ist, eine Kupplungstemperatur einer Fahrzeugkupplung zu bestimmen, nach einer weiteren Ausführungsform der Erfindung.

In einem ersten Trainierschritt TS1 werden mehrere, zeitlich aufeinanderfolgende Werte für eine der Fahrzeugkupplung zugeführte Leistung bereitgestellt. Diese Werte werden von einer Erfassungsvorrichtung wie einem Tiefpass-Filter oder einem Operationsverstärker erfasst. Die Erfassung der Werte für eine der Fahrzeugkupplung zugeführte Leistung kann analog wie im Ausführungsbeispiel der Figur 1 erfolgen. Im Ausführungsbeispiel der Figur 2 ist die der Fahrzeugkupplung zugeführte Leistung wiederum die der Fahrzeugkupplung während eines Schaltvorgangs beziehungsweise Gangwechsels zugeführte Schaltleistung.

In einem zweiten Trainierschritt S2 werden die bereitgestellten zeitlich aufeinanderfolgenden Werte für die Schaltleistung verarbeitet, um einen Eingangswert zu bestimmen, welcher für die Schaltleistung repräsentativ ist. Im Ausführungsbeispiel der Figur 2 umfasst das Verarbeiten der bereitgestellten, zeitlich aufeinanderfolgende Werte für die Schaltleistung analog zum Ausführungsbeispiel der Figur 1 das Bestimmen eines Mittelwerts der Schaltleistung.

In einem dritten Trainierschritt TS3 wird zumindest ein Wert zumindest eines Betriebsparameters der Fahrzeugkupplung bereitgestellt. Dieser Wert ist für eine Kupplungstemperatur der Fahrzeugkupplung repräsentativ und wird an zumindest einen Eingangsknoten des neuronalen Netzwerks übertragen.

In einem vierten Trainierschritt TS4 werden Werte für eine Kupplungstemperatur bereitgestellt. Diese Werte sind gemessene Werte für die Kupplungstemperatur. In einem nicht dargestellten Ausführungsbeispiel sind die Werte für die Kupplungstemperatur synthetisch erzeugt. Diese Werte werden an zumindest einen Ausgangsknoten des neuronalen Netzwerks übertragen.

Der erzeugte Trainingsdatensatz besteht aus dem Eingangswert und dem zumindest einen Wert des zumindest einen Betriebsparameters als Eingabedaten und den Werten für eine Kupplungstemperatur als Ausgabedaten.

Der gemäß dem Verfahren der Ausführungsform der Figur 2 erzeugte Trainingsdatensatz kann zum Training des neuronalen Netzwerks gemäß der Ausführungsform der Figur 1 verwendet werden.

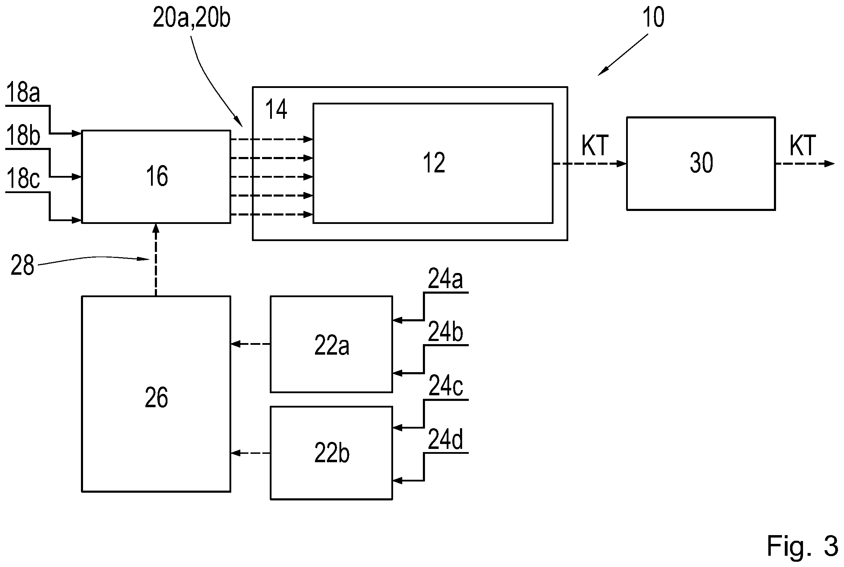

Figur 3 zeigt schematisch eine Steuereinrichtung 10 zur Bestimmung einer Kupplungstemperatur einer nicht dargestellten Fahrzeugkupplung mit einem neuronalen Netzwerk 12 gemäß einer weiteren Ausführungsform der Erfindung.

Die Steuereinrichtung 10 umfasst ein computerlesbares Speichermedium 14, auf welchem das neuronale Netzwerk 12 gespeichert ist. Die Steuereinrichtung 10 umfasst ferner eine Eingabevorrichtung 16, welche zum Empfang von Werten 18a, 18b, 18c von Betriebsparametern der Fahrzeugkupplung ausgebildet ist. Die Eingabevorrichtung 16 überträgt die Werte 18a, 18b, 18c der Betriebsparameter der Fahrzeugkupplung als Eingabedaten 20a an das neuronale Netzwerk 12.

Die Steuereinrichtung 10 umfasst ferner Erfassungsvorrichtungen 22a, 22b, welche zeitlich aufeinanderfolgende Werte 24a, 24b beziehungsweise 24c, 24d für eine der Fahrzeugkupplung zugeführte Leistung erfassen. Analog wie zu den Ausführungsformen der Figuren 1 und 2 handelt es sich bei den Erfassungsvorrichtung 22a, 22b um Tiefpass-Filter und bei den Werten 24a, 24b, 24c, 24d für eine der Fahrzeugkupplung zugeführte Leistung um eine der Fahrzeugkupplung während eines Schaltvorgangs beziehungsweise Gangwechsels zugeführte Schaltleistung. Die erfassten Werte 24a, 24b, 24c und 24d für die Schaltleistung werden von den Erfassungsvorrichtung 22a, 22b an eine Bestimmungsvorrichtung 26 übertragen. Die Bestimmungsvorrichtung 26 bestimmt durch Verarbeiten der zeitlich aufeinanderfolgenden Werte 24a, 24b, 24c, 24d zumindest einen Mittelwert für die Schaltleistung. Der zumindest eine Mittelwert für die Schaltleistung wird von der Bestimmungsvorrichtung 26 als Eingangswert 28 an die Eingabevorrichtung 16 übertragen. Die Eingabevorrichtung 16 überträgt den Eingangswert 28 als Eingabedaten 20b an das neuronale Netzwerk 12.

Aus den Eingabedaten 20a, 20b wird von dem neuronalen Netzwerk 12 eine Kupplungstemperatur KT der Fahrzeugkupplung bestimmt. Die bestimmte Kupplungstemperatur KT wird von dem neuronalen Netzwerk 12 an eine Ausgabevorrichtung 30 übertragen. Die Ausgabevorrichtung 30 kann die bestimmte Kupplungstemperatur KT an weitere Vorrichtungen der Fahrzeugsteuerung übertragen.

### Bezugszeichen

- 10: Steuereinrichtung
- 12: Neuronales Netzwerk
- 14: Speichermedium
- 16: Eingabevorrichtung
- 18a, 18b, 18c: Werte von Betriebsparametern
- 22a, 22b: Erfassungsvorrichtungen
- 24a, 24b,: zeitlich aufeinanderfolgende Werte für eine der Fahrzeugkupplung
- 24c, 24d: zugeführte Leistung
- 26: Bestimmungsvorrichtung
- 28: Eingangswert
- 30: Ausgabevorrichtung
- KT: Kupplungstemperatur
- BS1: erster Bestimmungsschritt
- BS2: zweiter Bestimmungsschritt
- BS3: dritter Bestimmungsschritt
- BS4: vierter Bestimmungsschritt
- TS1: erster Trainierschritt
- TS2: zweiter Trainierschritt
- TS3: dritter Trainierschritt
- TS4: vierter Trainierschritt

## Patentansprüche

1. Verfahren zum Bestimmen einer Kupplungstemperatur (KT) einer Fahrzeugkupplung mittels eines neuronalen Netzwerks (12), wobei das Verfahren die folgenden Schritte aufweist:
- Bestimmen (BS1) zumindest eines Eingangswerts (28), welcher für eine der Fahrzeugkupplung zugeführte Leistung repräsentativ ist, wobei der zumindest eine Eingangswert (28) basierend auf einer Verarbeitung zeitlich aufeinanderfolgender Werte (24a, 24b, 24c, 24d) für die der Fahrzeugkupplung zugeführte Leistung bestimmt wird;
- Eingabe (BS2) des zumindest einen Eingangswerts (28) als Eingabedaten (20b) in das neuronale Netzwerk (12);
- Eingabe (BS3) zumindest eines Wertes (18a, 18b, 18c) zumindest eines Betriebsparameters der Fahrzeugkupplung als Eingabedaten (20a) in das neuronale Netzwerk (12); und
- Bestimmen (BS4) einer Kupplungstemperatur (KT) durch das neuronale Netzwerk (12), basierend auf den Eingabedaten (20a, 20b) und einem von dem neuronalen Netzwerk (12) gelernten Zusammenhang zwischen einem zeitlichen Verlauf der Eingabedaten (20a, 20b) und der Kupplungstemperatur (KT), wobei die von dem neuronalen Netzwerk bestimmte Kupplungstemperatur weiteren Komponenten einer Fahrzeugsteuerung bereitgestellt wird, wobei das Bestimmen (BS1) des zumindest einen Eingangswerts (28) mittels einer Erfassungsvorrichtung (22a, 22b) erfolgt, welche die zeitlich aufeinanderfolgenden Werte (24a, 24b, 24c, 24d) für die der Fahrzeugkupplung zugeführte Leistung erfasst, und **dadurch gekennzeichnet, dass** die Erfassung der zeitlich aufeinanderfolgenden Werte (24a, 24b, 24c, 24d) für die der Fahrzeugkupplung zugeführte Leistung von einem vorbestimmten Startzeitpunkt bis zum Eingabezeitpunkt der Eingabedaten (20a, 20b) in das neuronale Netzwerk (12) erfolgt.

2. Verfahren nach Anspruch 1, wobei die Verarbeitung der zeitlich aufeinanderfolgenden Werte (24a, 24b, 24c, 24d) für die der Fahrzeugkupplung zugeführte Leistung die Bestimmung eines Mittelwerts für die der Fahrzeugkupplung zugeführte Leistung umfasst.

3. Verfahren nach Anspruch 2, wobei mehrere Erfassungsvorrichtungen (22a, 22b) zum Erfassen der zeitlich aufeinanderfolgenden
Werte (24a, 24b, 24c, 24d) für die der Fahrzeugkupplung zugeführte Leistung vorgesehen sind, wobei für jede der Erfassungsvorrichtungen (22a, 22b) ein unterschiedlicher Startzeitpunkt für die Erfassung bestimmt ist.

4. Verfahren nach einem der vorhergehenden Ansprüche, wobei die zumindest eine Erfassungsvorrichtung (22a, 22b) aus zumindest einem der folgenden ausgewählt ist: einer zur Datenerfassung ausgebildeten Steuereinheit, einem Tiefpass-Filter und einem Operationsverstärker.

5. Verfahren nach einem der vorhergehenden Ansprüche, wobei der zumindest eine Betriebsparameter der Fahrzeugkupplung aus zumindest einem der folgenden ausgewählt ist: einem Drehmoment einer Antriebsachse eines Fahrzeugmotors, welche mit der Fahrzeugkupplung in mechanischer Wirkverbindung steht; einer Drehzahldifferenz zwischen zwei rotierenden Kupplungselementen der Fahrzeugkupplung; einer Drehzahl eines rotierenden Kupplungselements der Fahrzeugkupplung; einem auf ein Kupplungselement der Fahrzeugkupplung wirkenden mechanischen Druck; einer Stromstärke eines durch ein Kupplungselement der Fahrzeugkupplung fließenden elektrischen Stroms; und einer Sumpftemperatur eines Fahrzeuggetriebes zu Beginn eines Schaltvorgangs der Fahrzeugkupplung.

6. Verfahren zum Erzeugen eines Trainingsdatensatzes für ein neuronales Netzwerk (12), welches dazu ausgebildet ist, eine Kupplungstemperatur (KT) einer Fahrzeugkupplung zu bestimmen gemäß dem Verfahren nach einem der vorangehenden Ansprüche, wobei das Verfahren die folgenden Schritte aufweist:
- Bereitstellen (TS1) mehrerer, zeitlich aufeinanderfolgender Werte (24a, 24b, 24c, 24d) für eine der Fahrzeugkupplung zugeführte Leistung;
- Verarbeiten (TS2) der bereitgestellten, zeitlich aufeinanderfolgenden Werte (24a, 24b, 24c, 24d), um einen Eingangswert (28) zu bestimmen, welcher für die der Fahrzeugkupplung zugeführte Leistung repräsentativ ist;
- Bereitstellen (TS3) zumindest eines Wertes (18a, 18b, 18c) zumindest eines Betriebsparameters der Fahrzeugkupplung; und
- Bereitstellen (TS4) von Werten für eine Kupplungstemperatur,
wobei der Trainingsdatensatz den Eingangswert (28) und den Wert (18a, 18b, 18c) des zumindest einen Betriebsparameters als Eingabedaten, sowie die Werte für die Kupplungstemperatur als Ausgabedaten umfasst.

7. Verfahren nach einem der Ansprüche 1 bis 5, wobei das neuronale Netzwerk (12) mit einem Trainingsdatensatz trainiert wurde, welcher gemäß dem Verfahren nach Anspruch 6 erzeugt wurde.

8. Steuereinrichtung (10) zur Bestimmung einer Kupplungstemperatur (KT) einer Fahrzeugkupplung gemäß dem Verfahren nach einem der vorangehenden Ansprüche, umfassend:
- ein computerlesbares Speichermedium (14), auf welchem ein neuronales Netzwerk (12) zum Bestimmen der Kupplungstemperatur (KT) gespeichert ist;
- zumindest eine Erfassungsvorrichtung (22a, 22b), welche zeitlich aufeinanderfolgende Werte (24a, 24b, 24c, 24d) für eine der Fahrzeugkupplung zugeführte Leistung erfasst;
- eine Bestimmungsvorrichtung (26) zur Bestimmung zumindest eines Eingangswerts (28), welcher für eine der Fahrzeugkupplung zugeführte Leistung repräsentativ ist, wobei der zumindest eine Eingangswert (28) basierend auf einer Verarbeitung der von der Erfassungsvorrichtung erfassten, zeitlich aufeinanderfolgenden Werte (24a, 24b, 24c, 24d) für die der Fahrzeugkupplung zugeführte Leistung bestimmt wird;
- eine Eingabevorrichtung (16) zur Eingabe von Eingabedaten (20a, 20b) in das neuronale Netzwerk (12), wobei die Eingabedaten (20a, 20b) den zumindest einen Eingangswert (28) und zumindest einen Wert (18a, 18b, 18c) zumindest eines Betriebsparameters der Fahrzeugkupplung umfassen; und
- eine Ausgabevorrichtung (30) zur Ausgabe der bestimmten Kupplungstemperatur (KT) durch das neuronale Netzwerk (12).

## Claims

1. Method for determining a clutch temperature (KT) of a vehicle clutch by way of a neural network (12), wherein the method comprises the following steps:
- determining (BS1) at least one input value (28) representative of a power supplied to the vehicle clutch, wherein the at least one input value (28) is determined based on processing temporally successive values (24a, 24b, 24c, 24d) for the power supplied to the vehicle clutch;
- inputting (BS2) the at least one input value (28) into the neural network (12) as input data (20b);
- inputting (BS3) at least one value (18a, 18b, 18c) of at least one operating parameter of the vehicle clutch into the neural network (12) as input data (20a); and
- determining (BS4) a clutch temperature (KT) by way of the neural network (12), based on the input data (20a, 20b) and a relationship, learned by the neural network (12), between a temporal profile of the input data (20a, 20b) and the clutch temperature (KT), wherein the clutch temperature determined by the neural network is provided to further components of a vehicle controller, wherein the at least one input value (28) is determined (BS1) by way of a recording device (22a, 22b) that records the temporally successive values (24a, 24b, 24c, 24d) for the power supplied to the vehicle clutch, and **characterized in that** the temporally successive values (24a, 24b, 24c, 24d) for the power supplied to the vehicle clutch are recorded from a predetermined start time until the input time of the input data (20a, 20b) into the neural network (12) .

2. Method according to Claim 1, wherein processing the temporally successive values (24a, 24b, 24c, 24d) for the power supplied to the vehicle clutch comprises determining an average value for the power supplied to the vehicle clutch.

3. Method according to Claim 2, wherein provision is made for multiple recording devices (22a, 22b) for recording the temporally successive values (24a, 24b, 24c, 24d) for the power supplied to the vehicle clutch, wherein a different start time for the recording is determined for each of the recording devices (22a, 22b).

4. Method according to one of the preceding claims, wherein the at least one recording device (22a, 22b) is selected from at least one of the following: a control unit designed to record data, a low-pass filter and an operational amplifier.

5. Method according to one of the preceding claims, wherein the at least one operating parameter of the vehicle clutch is selected from at least one of the following: a torque of a drive axle of a vehicle engine, said drive axle being operatively mechanically connected to the vehicle clutch; a speed difference between two rotating clutch elements of the vehicle clutch; a speed of a rotating clutch element of the vehicle clutch; a mechanical pressure acting on a clutch element of the vehicle clutch; an amperage of an electric current flowing through a clutch element of the vehicle clutch; and a sump temperature of a vehicle transmission at the start of a vehicle clutch shift procedure.

6. Method for generating a training data set for a neural network (12) designed to determine a clutch temperature (KT) of a vehicle clutch in accordance with the method according to one of the preceding claims, wherein the method comprises the following steps:
- providing (TS1) multiple temporally successive values (24a, 24b, 24c, 24d) for a power supplied to the vehicle clutch;
- processing (TS2) the provided temporally successive values (24a, 24b, 24c, 24d) in order to determine an input value (28) representative of the power supplied to the vehicle clutch;
- providing (TS3) at least one value (18a, 18b, 18c) of at least one operating parameter of the vehicle clutch; and
- providing (TS4) values for a clutch temperature, wherein the training data set comprises the input value (28) and the value (18a, 18b, 18c) of the at least one operating parameter as input data, and the values for the clutch temperature as output data.

7. Method according to one of Claims 1 to 5, wherein the neural network (12) has been trained with a training data set that has been generated in accordance with the method according to Claim 6.

8. Control device (10) for determining a clutch temperature (KT) of a vehicle clutch in accordance with the method according to one of the preceding claims, comprising:
- a computer-readable storage medium (14) on which a neural network (12) for determining the clutch temperature (KT) is stored;
- at least one recording device (22a, 22b) that records temporally successive values (24a, 24b, 24c, 24d) for a power supplied to the vehicle clutch;
- a determination device (26) for determining at least one input value (28) representative of a power supplied to the vehicle clutch, wherein the at least one input value (28) is determined based on processing the temporally successive values (24a, 24b, 24c, 24d), recorded by the recording device, for the power supplied to the vehicle clutch;
- an input device (16) for inputting input data (20a, 20b) into the neural network (12), wherein the input data (20a, 20b) comprise the at least one input value (28) and at least one value (18a, 18b, 18c) of at least one operating parameter of the vehicle clutch; and
- an output device (30) for outputting the determined clutch temperature (KT) by way of the neural network (12).

## Revendications

1. Procédé de détermination d'une température d'embrayage (KT) d'un embrayage de véhicule au moyen d'un réseau neuronal (12), le procédé comportant les étapes suivantes :
- détermination (BS1) d'au moins une valeur d'entrée (28) qui est représentative d'une puissance fournie à l'embrayage de véhicule, ladite au moins une valeur d'entrée (28) étant déterminée sur la base d'un traitement de valeurs consécutives dans le temps (24a, 24b, 24c, 24d) pour la puissance fournie à l'embrayage de véhicule,
- entrée (BS2) de ladite au moins une valeur d'entrée (28) en tant que données d'entrée (20b) dans le réseau neuronal (12) ;
- entrée (BS3) d'au moins une valeur (18a, 18b, 18c) d'au moins un paramètre de fonctionnement de l'embrayage de véhicule en tant que données d'entrée (20a) dans le réseau neuronal (12) ; et
- détermination (BS4) d'une température d'embrayage (KT) par le réseau neuronal (12), sur la base des données d'entrée (20a, 20b) et d'une relation apprise par le réseau neuronal (12) entre une évolution dans le temps des données d'entrée (20a, 20b) et la température d'embrayage (KT), la température d'embrayage déterminée par le réseau neuronal étant fournie à d'autres composants d'une commande de véhicule, la détermination (BS1) de ladite au moins une valeur d'entrée (28) s'effectuant au moyen d'un dispositif de détection (22a, 22b) qui détecte les valeurs consécutives dans le temps (24a, 24b, 24c, 24d) pour la puissance fournie à l'embrayage de véhicule, et **caractérisé en ce que** la détection des valeurs consécutives dans le temps (24a, 24b, 24c, 24d) pour la puissance fournie à l'embrayage de véhicule s'effectue à partir d'un instant de début prédéterminé jusqu'à l'instant d'entrée des données d'entrée (20a, 20b) dans le réseau neuronal (12).

2. Procédé selon la revendication 1, dans lequel le traitement des valeurs consécutives dans le temps (24a, 24b, 24c, 24d) pour la puissance fournie à l'embrayage de véhicule comprend la détermination d'une valeur moyenne de la puissance fournie à l'embrayage de véhicule.

3. Procédé selon la revendication 2, dans lequel plusieurs dispositifs de détection (22a, 22b) sont prévus pour détecter les valeurs consécutives dans le temps (24a, 24b, 24c, 24d) pour la puissance fournie à l'embrayage de véhicule, un instant de début différent pour la détection étant déterminé pour chacun des dispositifs de détection (22a, 22b).

4. Procédé selon l'une quelconque des revendications précédentes, dans lequel ledit au moins un dispositif de détection (22a, 22b) est sélectionné parmi au moins l'un des suivants : une unité de commande configurée pour l'acquisition de données, un filtre passe-bas et un amplificateur opérationnel.

5. Procédé selon l'une quelconque des revendications précédentes, dans lequel ledit au moins un paramètre de fonctionnement de l'embrayage de véhicule est sélectionné parmi au moins l'un des suivants : un couple d'un arbre d'entraînement d'un moteur de véhicule, qui est en liaison mécanique fonctionnelle avec l'embrayage de véhicule ; une différence de régime entre deux éléments d'embrayage rotatifs de l'embrayage de véhicule ; un régime d'un élément d'embrayage rotatif de l'embrayage de véhicule ; une pression mécanique agissant sur un élément d'embrayage de l'embrayage de véhicule ; une intensité de courant d'un courant électrique circulant à travers un élément d'embrayage de l'embrayage de véhicule ; et une température de carter d'une boîte de vitesses de véhicule au début d'un processus de changement de rapport de l'embrayage de véhicule.

6. Procédé de génération d'un jeu de données d'apprentissage pour un réseau neuronal (12), qui est configuré pour déterminer une température d'embrayage (KT) d'un embrayage de véhicule conformément au procédé selon l'une quelconque des revendications précédentes, le procédé comportant les étapes suivantes :
- fourniture (TS1) de plusieurs valeurs consécutives dans le temps (24a, 24b, 24c, 24d) d'une puissance fournie à l'embrayage de véhicule,
- traitement (TS2) des valeurs consécutives dans le temps (24a, 24b, 24c, 24d) fournies afin de déterminer une valeur d'entrée (28) qui est représentative de la puissance fournie à l'embrayage de véhicule ;
- fourniture (TS3) d'au moins une valeur (18a, 18b, 18c) d'au moins un paramètre de fonctionnement de l'embrayage de véhicule ; et
- fourniture (TS4) de valeurs d'une température d'embrayage,
le jeu de données d'apprentissage comprenant la valeur d'entrée (28) et la valeur (18a, 18b, 18c) dudit au moins un paramètre de fonctionnement en tant que données d'entrée, ainsi que les valeurs de la température d'embrayage en tant que données de sortie.

7. Procédé selon l'une quelconque des revendications 1 à 5, dans lequel le réseau neuronal (12) a été entraîné avec un jeu de données d'apprentissage qui a été généré conformément au procédé selon la revendication 6.

8. Dispositif de commande (10) pour la détermination d'une température d'embrayage (KT) d'un embrayage de véhicule conformément au procédé selon l'une quelconque des revendications précédentes, comprenant :
- un support de stockage (14) lisible par ordinateur sur lequel est mémorisé un réseau neuronal (12) pour déterminer la température d'embrayage (KT) ;
- au moins un dispositif d'acquisition (22a, 22b) qui acquiert des valeurs consécutives dans le temps (24a, 24b, 24c, 24d) d'une puissance fournie à l'embrayage de véhicule ;
- un dispositif de détermination (26) pour déterminer au moins une valeur d'entrée (28) qui est représentative d'une puissance fournie à l'embrayage de véhicule, ladite au moins une valeur d'entrée (28) étant déterminée sur la base d'un traitement des valeurs consécutives dans le temps (24a, 24b, 24c, 24d) pour la puissance fournie à l'embrayage de véhicule, acquises par le dispositif d'acquisition,
- un dispositif d'entrée (16) pour l'entrée de données d'entrée (20a, 20b) dans le réseau neuronal (12), les données d'entrée (20a, 20b) comprenant ladite au moins une valeur d'entrée (28) et au moins une valeur (18a, 18b, 18c) d'au moins un paramètre de fonctionnement de l'embrayage de véhicule ; et
- un dispositif de sortie (30) pour la sortie de la température d'embrayage (KT) déterminée par le réseau neuronal (12).
